# EUROPÄISCHE PATENTSCHRIFT

(11) **EP 2 113 221 B1**
(45) Veröffentlichungstag und Bekanntmachung des Hinweises auf die Patenterteilung: **07.10.2015**
(21) Anmeldenummer: 09002539.6
(22) Anmeldetag: 23.02.2009
(51) Int. Cl.: A61C 8/00

(54) **Dentalimplantat aus keramischem Werkstoff**
Dental implant made of ceramics
Implant dentaire en matière céramique

(30) Priorität: 25.04.2008 DE 102008020818
(43) Veröffentlichungstag der Anmeldung: 04.11.2009
(73) Patentinhaber: Gebr. Brasseler GmbH & Co. KG, D-32657 Lemgo (DE)
(72) Erfinder: Luhmann, Ingo, 32657 Lemgo (DE)
(74) Vertreter: Hoefer & Partner Patentanwälte mbB

(56) Entgegenhaltungen:
- WO-A-2005/044133
- WO-A-2007/039206
- DE-C1- 3 241 963

## Beschreibung

Die Erfindung bezieht sich auf ein Dentalimplantat gemäß den Merkmalen des Oberbegriffs des Anspruches 1.

Im Einzelnen bezieht sich die Erfindung auf ein zweiteiliges Dentalimplantat aus einem keramischen Werkstoff.

Der Stand der Technik zeigt unterschiedliche Ausgestaltungsformen von Dentalimplantaten. Abgesehen von den einteiligen Implantaten, bei denen der enossale Teil und der koronale Teil einstückig miteinander verbunden sind, sind zweiteilige Implantate bekannt, bei denen der enossale Teil in den Kiefer eines Patienten eingesetzt wird und nachfolgend der koronale Teil montiert wird. Somit wird bei einem zweiteiligen Implantat zunächst der enossale Teil eingesetzt, anschließend wird die Wunde versorgt, so dass das Implantat ohne Belastung einwachsen kann. Anschließend erfolgt dann in einem weiteren Arbeitsschritt die Montage des koronalen Teils. Hierzu ist es bekannt, dass das enossale Teil mit einer Gewindeausnehmung versehen ist, in welche ein Gewindeansatz des koronalen Teils einschraubbar ist.

Die bisher bekannten zweiteiligen Implantate sind aus metallischen Werkstoffen, beispielsweise Titan, gefertigt. Hierbei ist es möglich, die Gewindeausnehmung des enossalen Teils einfach zu erzeugen.

Bei einem aus Keramik gefertigten Dentalimplantat ergeben sich jedoch hinsichtlich des Keramikwerkstoffes andere Anforderungen und Eigenschaften der Herstellungsverfahren. Eine Umsetzung durch reinen Materialaustausch führt somit nicht zu einem funktionsfähigen Dentalimplantat.

Aus der WO 2007/039206 A1 ist ein zweiteiliges Dentalimplantat mit einem enossalen Tell und einem koronalen Teil vorbekannt. Der enossale Teil weist einen formschlüssigen, mit einem Werkzeug in Eingriff bringbaren Drehmomentübertragungsbereich auf, mit Hilfe dessen der enossale Teil in eine Knochenbohrung eingeschraubt werden kann. Der koronale Teil ist mit Befestigungsmitteln versehen, welche eine Drehung des koronalen Teils relativ zu dem enossalen Teil verhindern und die beiden Teile somit formschlüssig verankern.

Die WO 2005/044133 A1 zeigt ein zweiteiliges Dentalimplantat mit einem enossalen Teil und einem koronalen Teil, welche ebenfalls beide aus Keramik gefertigt sind. Der enossale Teil (Gewindestück) ist mit einem Sechskant versehen, in welchen ein Werkzeug einsetzbar ist. Dieser Sechskant wird beim Einsetzen eines Pfostens formschlüssig von einem Sechskantansatz des Pfostens ergriffen.

Der Erfindung liegt die Aufgabe zugrunde, ein aus einem keramischen Werkstoff bestehendes zweiteiliges Dentalimplantat zu schaffen, welches bei einfachem Aufbau und einfacher, kostengünstiger Herstellbarkeit die Nachteile des Standes der Technik vermeidet und praxisgerecht ausgebildet ist.

Erfindungsgemäß wird die Aufgabe durch die Merkmalskombination des Anspruchs 1 gelöst, die Unteransprüche zeigen weitere vorteilhafte Ausgestaltungen der Erfindung.

Erfindungsgemäß ist somit vorgesehen, dass der enossale Teil an seinem dem koronalen Teil zugewandten Bereich mit einem formschlüssig mit einem Werkzeug in Eingriff bringbaren Drehmomentübertragungsbereich versehen ist, welcher an einer außenliegenden Kontur oder Außenseite des enossalen Teils ausgebildet ist. Somit ist es auf besonders einfache Weise möglich, den enossalen Teil in eine Bohrung in einem Kiefer eines Patienten einzuschrauben. Erfindungsgemäß ist der koronale Teil so ausgebildet, dass er mit einer Ausnehmung versehen ist, in welcher zumindest der Drehmomentübertragungsbereich oder ein Teil desselben aufnehmbar ist. Es ist somit erfindungsgemäß sichergestellt, dass der enossale Teil des Dentalimplantats problemlos einsetzbar ist, wobei die Formgebung und Formgestaltung so gewählt ist, dass diese einfach und zuverlässig aus einem keramischen Werkstoff gefertigt werden kann.

Auch die Montage des koronalen Teils ist erfindungsgemäß besonders einfach und zuverlässig realisierbar, da dieser mit einer Ausnehmung versehen ist, die glatt ausgebildet ist und somit einfach herstellbar ist.

Erfindungsgemäß ist somit ein zweiteiliges Dentalimplantat geschaffen, welches aus einem keramischen Werkstoff, beispielsweise Zirkonoxid, herstellbar ist.

Bei der Erfindung ist vorgesehen, dass der enossale Teil einen stiftartigen Ansatz aufweist, welcher passend in eine Ausnehmung des koronalen Teils einführbar ist. Der koronale Teil wird somit sicher gehaltert und positioniert an dem enossalen Teil montiert. Dies kann mittels eines Fügeverfahrens, beispielsweise eines Klebeverfahrens, erfolgen. Auch hierbei führt die geometrisch einfache Ausgestaltung zu einer Formgebung, welche die problemlose Fertigung aus einem keramischen Werkstoff ermöglicht.

In einer alternativen Ausgestaltung der Erfindung ist vorgesehen, dass der enossale Teil und der koronale Teil jeweils beide mit einer zentrischen Ausnehmung versehen sind, in welche ein Stift einsetzbar ist, der die Halterung und Montagefunktion übernimmt. Der Stift kann beispielsweise zylindrisch ausgebildet sein und aus einem keramischen Werkstoff, einem faserverstärkten Kunststoff oder auch aus einem metallischen Werkstoff, wie etwa Titan, bestehen.

Die Ausnehmung des koronalen Teils, in welche der Drehmomentübertragungsbereich einsetzbar ist, kann entweder so ausgebildet sein, dass der Drehmomentübertragungsbereich lediglich aufgenommen, d.h., eingesteckt wird. Es ist jedoch auch möglich, den Drehmomentübertragungsbereich formschlüssig mit der Wandung der Ausnehmung des koronalen Teils zu koppeln, wobei die formschlüssige Kopplung nicht Teil der beanspruchten Erfindung ist.

Im Folgenden wird die Erfindung anhand von Ausführungsbeispielen in Verbindung mit der Zeichnung beschrieben. Dabei zeigt:
- Fig. 1: eine schematische Seitenansicht eines ersten Ausführungsbeispiels der Erfindung,
- Fig. 2: eine Schnittansicht der Darstellung gemäß Fig. 1,
- Fig. 3: eine Schnittansicht, analog Fig. 2, im montierten Zustand,
- Fig. 4: eine perspektivische Ansicht des Ausführungsbeispiels der Fig. 1-3 im demontierten Zustand,
- Fig. 5: eine Schnittansicht, analog Fig. 3, eines weiteren Ausführungsbeispiels, welches nicht Teil der beanspruchten Erfindung ist,
- Fig. 6: eine Schnittansicht, analog den Fig. 3 und 5, eines weiteren Ausführungsbeispiels,
- Fig. 7: eine Schnittansicht, analog Fig. 6, einer Abwandlung des in Fig. 6 gezeigten Ausführungsbeispiels, welches nicht Teil der beanspruchten Erfindung ist,
- Fig. 8: eine perspektivische Ansicht, analog Fig. 4, des in Fig. 7 gezeigten Ausführungsbeispiels, und
- Fig. 9: eine Schnittansicht im demontierten Zustand des in Fig. 6 gezeigten Ausführungsbeispiels.

Bei der nachfolgenden Beschreibung werden gleiche Teile der unterschiedlichen Ausführungsbeispiele mit gleichen Bezugsziffern versehen.

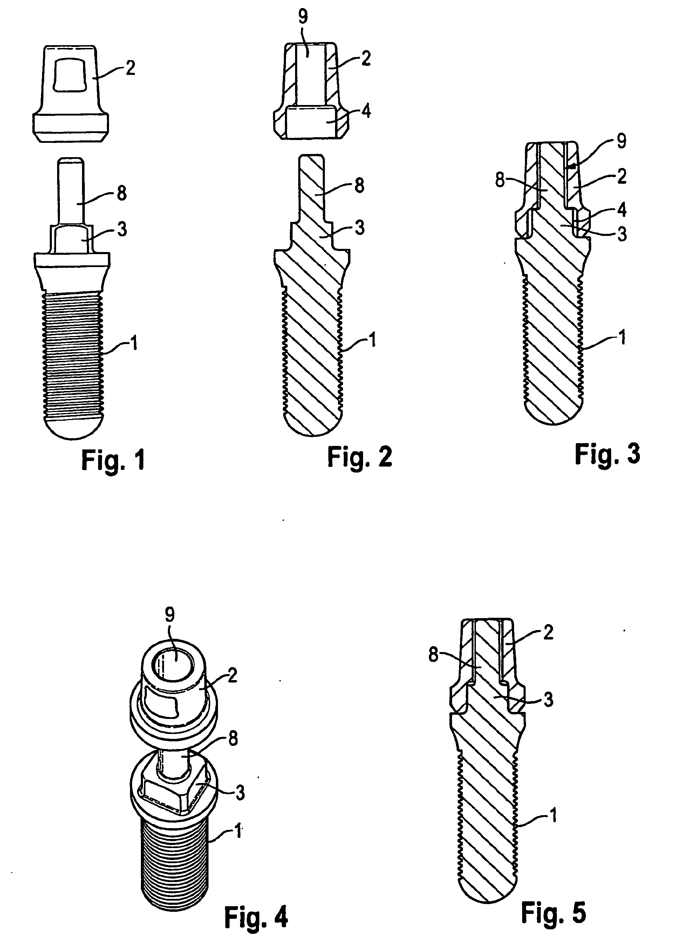

Die Fig. 1 zeigt ein erstes Ausführungsbeispiels eines erfindungsgemäßen Dentalimplantats. Dieses umfasst einen enossalen Teil 1, welcher mit einem Außengewinde versehen ist. Der Aufbau des enossalen Teils ist aus dem Stand der Technik bekannt und braucht an dieser Stelle nicht weiter beschrieben werden. Es versteht sich, dass unterschiedliche Gewindeformen, zylindrische oder konische Grundkörper sowie unterschiedliche Endbereiche und Schulterbereiche ausgebildet sein können.

Der enossale Teil 1 umfasst einen Drehmomentübertragungsbereich 3, der beispielsweise als Vierkant ausgebildet sein kann, um ein Werkzeug ansetzen zu können.

Angrenzend an den Drehmomentübertragungsbereich 3 ist einstückig ein stiftartiger Ansatz 8 ausgebildet, welcher bei dem Ausführungsbeispiel zylindrisch dimensioniert ist.

Das Dentalimplantat umfasst weiterhin einen koronalen Teil 2, welcher (siehe Fig. 2) mit einer Ausnehmung 4 sowie einer daran angrenzenden Ausnehmung 9 versehen ist. Die äußere Form und Gestaltung des koronalen Teils ist, wie aus dem Stand der Technik bekannt, zu gestalten, so dass auf weitere Beschreibungen an dieser Stelle verzichtet werden kann.

Die Ausnehmung 4 ist bei dem in den Fig. 1 und 2 gezeigten Ausführungsbeispiel so dimensioniert, dass der Drehmomentübertragungsbereich 3 vollständig aufgenommen werden kann, so wie dies in Fig. 3 gezeigt ist. Somit ist die Ausnehmung 4 an ihrer Innenwandung zylindrisch ausgebildet.

Die Ausnehmung 9 ist mit einem zylindrischen Querschnitt versehen und passend zu dem stiftartigen Ansatz 8 ausgebildet, so dass dieser zur Montage des koronalen Teils 2 gefügt werden kann, beispielsweise mittels eines Klebeverfahrens.

Die Fig. 4 zeigt eine perspektivische Ansicht der Darstellung gemäß Fig. 2.

Die Fig. 5 zeigt ein abgewandeltes Ausführungsbeispiel, bei welchem die Ausnehmung 4 so dimensioniert ist, dass die passgenau und formschlüssig den Drehmomentübertragungsbereich 3 umgreift. Somit ist die Ausnehmung 4 beispielsweise mit einem Vierkantquerschnitt versehen. Dieses Ausführungsbeispiel ist nicht Teil der beanspruchten Erfindung.

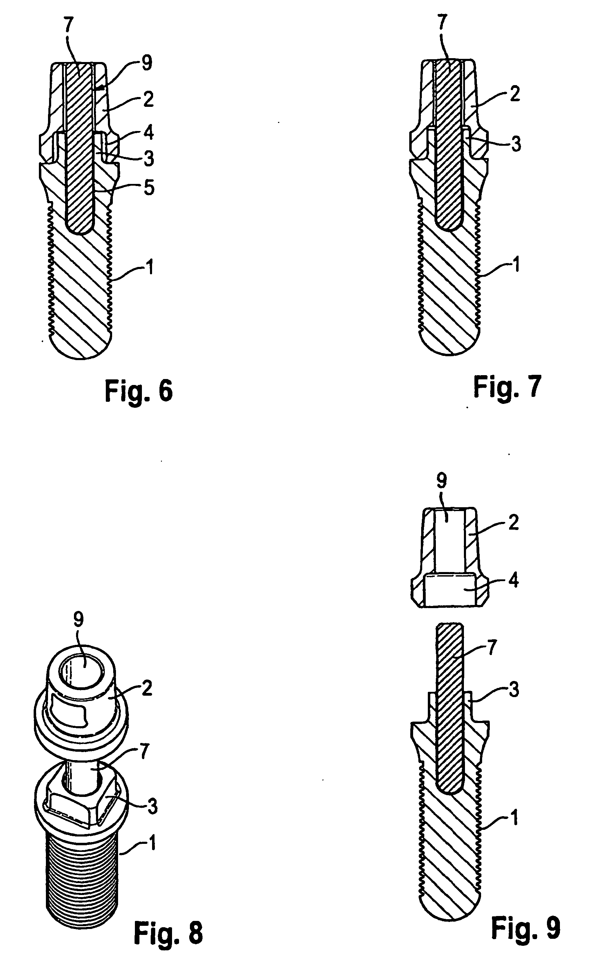

Bei dem Ausführungsbeispiel der Fig. 6 ist der stiftartige Ansatz 8 durch einen Stift 7 ersetzt. Somit weist auch der enossale Teil 1 eine zylindrische Ausnehmung auf, in welche der Stift 7 passend gefügt werden kann, beispielsweise geklebt werden kann. Entsprechend ist in dem koronalen Teil 2 ebenfalls eine zylindrische Ausnehmung vorgesehen. Der Stift 7 kann aus einem keramischen Material, beispielsweise Zirkonoxid, aus einem faserverstärkten Kunststoff oder aus Titan gefertigt sein. Hinsichtlich der Dimensionierung der Ausnehmung 4 entspricht das Ausführungsbeispiel der Fig. 6 der Darstellung der Fig. 3. Die Fig. 7 zeigt ein Ausführungsbeispiel analog Fig. 5, bei welchem ein formschlüssiges Einsetzen des Drehmomentübertragungsbereichs 3 in eine entsprechend gestaltete Ausnehmung des koronalen Teils 2 erfolgt.

Die Fig. 8 zeigt einen demontierten Zustand der Ausführungsbeispiele der Fig. 6 und 7 mit dem Stift 7.

Die Fig. 9 zeigt eine Schnittansicht, analog Fig. 6, im demontierten Zustand.

### Bezugszeichenliste

- 1: Enossaler Teil
- 2: Koronaler Teil
- 3: Drehmomentübertragungsbereich
- 4: Ausnehmung
- 5: Zentrische Ausnehmung des enossalen Teils
- 7: Stift
- 8: Stiftartiger Ansatz
- 9: Ausnehmung des koronalen Teils.

## Patentansprüche

1. Dentalimplantat mit einem enossalen Teil (1) und einem koronalen Teil (2), welche miteinander verbindbar sind, wobei der enossale Teil (1) und der koronale Teil (2) aus einem keramischen Werkstoff gefertigt sind, wobei der enossale Teil (1) an seinem, dem koronalen Teil (2) zugewandten Bereich mit einem formschlüssig mit einem Werkzeug in Eingriff bringbaren Drehmomentübertragungsbereich (3) versehen ist, welcher an einer außenliegenden Kontur ausgebildet ist, und wobei der koronale Teil (2) mit einer zylindrischen, ersten Ausnehmung (4) zur Aufnahme zumindest eines Teils des Drehmomentübertragungsbereichs (3) versehen ist, wobei der enossale Teil, angrenzend an den Drehmomentübertragungsbereich (3) und einstückig damit einen stiftartigen zylindrischen Ansatz (8) aufweist, welcher passend in eine zweite Ausnehmung (9) des koronalen Teils (2) einführbar ist oder wobei der enossale Teil (1) und der koronale Teil (2) mit einer zentrischen Ausnehmung (5, 9) versehen sind, in welche ein Stift (7) einsetzbar ist.

2. Dentalimplantat nach Anspruch 1, wobei der Drehmomentübertragungsbereich (3) in Form eines Mehrkants ausgebildet ist.

3. Dentalimplantat nach Anspruch 1, wobei der Stift (7) zylindrisch ausgebildet ist.

4. Dentalimplantat nach einem der Ansprüche 1 oder 3, wobei der Stift (7) aus einem keramischen Material gefertigt ist.

5. Dentalimplantat nach einem der Ansprüche 1 oder 3, wobei Stift (7) aus einem faserverstärkten Kunststoff gefertigt ist.

6. Dentalimplantat nach einem der Ansprüche 1 oder 3, wobei der Stift (7) aus einem Titanwerkstoff gefertigt ist.

7. Dentalimplantat nach einem der Ansprüche 1 bis 6, wobei der enossale Teil (1) und der koronale Teil (2) aus einem Zirkonoxidkeramikwerkstoff gefertigt sind.

## Claims

1. Dental implant comprising an endosseous part (1) and a coronal part (2) which are interconnectable, wherein the endosseous part (1) and the coronal part (2) are made from a ceramic material, wherein the endosseous part (1) on its portion facing the coronal part (2) is provided with a torque transmitting portion (3) which can be brought into engagement with a tool in a form-fit manner and which is formed on an exterior contour, and wherein the coronal part (2) is provided with a cylindrical first recess (4) for receiving at least a part of the torque transmitting portion (3), wherein the endosseous part comprises a pin-like cylindrical attachment (8) adjoining the torque transmitting portion (3) and being integral therewith, said pin-like attachment (8) being fittingly insertable into a second recess (9) of the coronal part (2), or wherein the endosseous part (1) and the coronal part (2) are provided with a centric recess (5, 9) into which a pin (7) is insertable.

2. Dental implant according to claim 1, wherein the torque transmitting portion (3) is configured in the form of a polygon.

3. Dental implant according to claim 1, wherein the pin (7) is made cylindrical.

4. Dental implant according to any one of claims 1 or 3, wherein the pin (7) is made from a ceramic material.

5. Dental implant according to any one of claims 1 or 3, wherein the pin (7) is made from a fiber-reinforced plastic.

6. Dental implant according to any one of claims 1 to 3, wherein the pin (7) is made from a titanium material.

7. Dental implant according to any one of claims 1 to 6, wherein the endosseous part (1) and the coronal part (2) are made from a zirconium oxide ceramic material.

## Revendications

1. Implant dentaire, avec une partie endo-osseuse (1) et une partie coronaire (2) qui peuvent être assemblées l'une à l'autre, sachant que la partie endo-osseuse (1) et la partie coronaire (2) sont fabriquées en un matériau céramique, sachant que la partie endo-osseuse (1) est pourvue, dans sa région tournée vers la partie coronaire (2), d'une région (3) de transmission de couple, située sur un contour extérieur, pouvant être amenée en engagement positif avec un outil, et sachant que la partie coronaire (2) est pourvue d'un premier évidement cylindrique (4) destiné à recevoir au moins une partie de la région (3) de transmission de couple, sachant que la partie endo-osseuse présente, au voisinage de la région (3) de transmission de couple et d'un seul tenant avec celle-ci, un embout cylindrique (8) du genre broche qui peut être introduit en ajustement dans un deuxième évidement (9) de la partie coronaire (2), ou sachant que la partie endo-osseuse (1) et la partie coronaire (2) sont pourvues d'un évidement centré (5, 9) dans lequel une broche (7) peut être insérée.

2. Implant dentaire selon la revendication 1, sachant que la région (3) de transmission de couple est réalisée sous la forme d'un multipans.

3. Implant dentaire selon la revendication 1, sachant que la broche (7) est réalisée cylindrique.

4. Implant dentaire selon l'une des revendications 1 ou 3, sachant que la broche (7) est fabriquée en un matériau céramique.

5. Implant dentaire selon l'une des revendications 1 ou 3, sachant que la broche (7) est fabriquée en une matière plastique renforcée par des fibres.

6. Implant dentaire selon l'une des revendications 1 ou 3, sachant que la broche (7) est fabriquée en un matériau à base de titane.

7. Implant dentaire selon l'une des revendications 1 à 6, sachant que la partie endo-osseuse (1) et la partie coronaire (2) sont fabriquées en un matériau céramique à base d'oxyde de zirconium.
